# EUROPEAN PATENT APPLICATION

(11) **EP 4 329 173 A1**
(43) Date of publication of application: **28.02.2024**
(21) Application number: 23190036.6
(22) Date of filing: 07.08.2023
(51) Int. Cl.: H02M 1/00, H02M 1/08, H02M 1/42, H02M 1/32

(54) **TOTEM-POLE POWER FACTOR CORRECTION CIRCUIT AND POWER SUPPLY MODULE**

(30) Priority: 26.08.2022 CN 202211032210
(71) Applicant: Huawei Digital Power Technologies Co., Ltd., Shenzhen, Guangdong 518043 (CN)
(72) Inventor: CHIN, Ken, 518043 Shenzhen (CN); YANG, Feng, 518043 Shenzhen (CN); WANG, Shuaibing, 518043 Shenzhen (CN)
(74) Representative: Gill Jennings & Every LLP

(57) **Abstract**

This application provides a totem-pole power factor correction circuit and a power supply module. A detection circuit of the totem-pole power factor correction circuit can detect a current between a power transistor and a bridge arm middle point, and determine a current value when an inductor is charged. When a control circuit controls a drive circuit to drive the power transistor to be turned on, in response to a value of a current flowing through the inductor being greater than a first predetermined value, the drive circuit can drive, in time based on a detection result of the detection circuit, the power transistor to be turned off, to protect the power transistor. Based on the totem-pole power factor correction circuit and the power supply module in which the totem-pole power factor correction circuit is located that are provided in embodiments of this application, structure complexity is reduced, and the costs are reduced, thereby further reducing space occupied by a device.

## Description

### TECHNICAL FIELD

This application relates to power supply technologies, and in particular, to a totem-pole power factor correction circuit and a power supply module.

### BACKGROUND

A power supply module includes a totem-pole power factor correction circuit and a direct-current conversion circuit. The totem-pole power factor correction circuit is configured to: receive an alternating current, and provide an input voltage for the direct-current conversion circuit. The totem-pole power factor correction circuit includes at least one power transistor and at least one inductor. A control circuit is configured to control turn-on and turn-off of the at least one power transistor, so that the inductor is alternately charged and discharged. The totem-pole power factor correction circuit further includes a current detection circuit. The current detection circuit is configured to: detect a current when the inductor is charged, and turn off the power transistor for protection when the current of the inductor is excessively large. How to simplify a structure of a detection circuit of the totem-pole power factor correction circuit is a technical problem to be resolved in this field.

### SUMMARY

This application provides a totem-pole power factor correction circuit and a power supply module, to resolve a technical problem that a totem-pole power factor correction circuit has a relatively complex structure.

A first aspect of this application provides a totem-pole power factor correction circuit, including: an inductor, a half-bridge circuit, a control circuit, a drive circuit, and a first detection circuit. The half-bridge circuit includes a power transistor. The inductor is charged or discharged through the power transistor. The drive circuit is configured to drive the power transistor to be turned on or turned off. The control circuit is configured to control the drive circuit.

The first detection circuit is configured to detect a first current between the power transistor and a bridge arm middle point of the half-bridge circuit When a current value of the first current is greater than a first predetermined value, if the control circuit controls the drive circuit to drive the power transistor to be turned on in this case, in response to the current value of the first current being greater than the first predetermined value, the drive circuit still drives the power transistor to be turned off, thereby protecting the power transistor and preventing the power transistor from being damaged when a current flowing through the power transistor is relatively large. In addition, because the detection circuit disposed in this embodiment can relatively directly detect the current between the power transistor and the bridge arm middle point, it is not necessary to dispose a device with a relatively complex structure, such as a current transformer and an auxiliary winding. In this way, based on the totem-pole power factor correction circuit and a power supply module in which the totem-pole power factor correction circuit is located that are provided in embodiments of this application, structural complexity is reduced, and the costs are reduced, thereby reducing space occupied by the device.

In an embodiment of the first aspect of this application, when the current value of the first current is less than or equal to the first predetermined value, if the control circuit controls the drive circuit to drive the power transistor to be turned on in this case, in response to the current value of the first current being less than or equal to the first predetermined value, the drive circuit drives, under control of the control circuit, the power transistor to be turned on. In this embodiment, when die current flowing through the power transistor is relatively small, the drive circuit may continuously drive, under the control of the control circuit, the power transistor to be turned on, thereby ensuring normal working of the totem-pole power factor correction circuit.

In an embodiment of the first aspect of this application, the totem-pole power factor correction circuit further includes a second detection circuit. The second detection circuit is connected to the bridge arm middle point of the half-bridge circuit, and is configured to detect a first voltage at the bridge arm middle point. When a voltage value of the first voltage is greater than a second predetermined value, if the control circuit controls the drive circuit to drive the power transistor to be turned on in this case, in response to the voltage value of the first voltage being greater than the second predetermined value, the control circuit stops controlling the drive circuit to drive the power transistor to be turned on, but controls the drive circuit to drive the power transistor to be turned off, thereby protecting the power transistor and the drive circuit. Because the detection circuit disposed in this embodiment of this application can relatively directly detect a voltage value at the bridge arm middle point, it is not necessary to dispose a device with a relatively complex structure, such as a current transformer and an auxiliary winding. In this way, based on the totem-pole power factor correction circuit and the power supply module in which the totem-pole power factor correction circuit is located that are provided in embodiments of this application, structural complexity can be reduced, and the costs can be reduced, thereby reducing space occupied by the device.

In an embodiment of the first aspect of this application, when the voltage value of the first voltage is less than or equal to the second predetermined value, if the control circuit controls the drive circuit to drive the power transistor to be turned on in this case, in response to the voltage value of the first voltage being less than or equal to the second predetermined value, the control circuit continues to drive the power transistor to be turned on. In this embodiment, when a voltage at the bridge arm middle point is relatively small, a current flowing through the power transistor is also relatively small, and the control circuit may continuously control the drive circuit to drive the power transistor to be turned on, thereby ensuring normal working of the totem-pole power factor correction circuit.

In an embodiment of the first aspect of this application, the first detection circuit specifically includes a first comparator; and the drive circuit includes a first phase inverter, a first OR logic circuit, a first flip-flop, and a first buffer. The first comparator is configured to send a first protection signal to the first OR logic circuit when the first current is greater than the first predetermined value. The first phase inverter is configured to: perform phase inversion processing on a control signal, and send a first phase-inverted signal to the first OR logic circuit. The first OR logic circuit is configured to send a first OR logic signal to the first flip-flop based on the first phase-inverted signal and the first protection signal. The first flip-flop is configured to send a first flip-flop signal to the first buffer based on the first OR logic signal and the control signal. The first buffer is configured to send a drive signal to the power transistor based on the first flip-flop signal. Therefore, in the totem-pole power factor correction circuit provided in this embodiment, a voltage at the power transistor and the voltage at the bridge arm middle point are directly detected through devices such as a comparator, a phase inverter, an OR logic circuit, and a flip-flop disposed in the detection circuit, to determine, based on the voltage at the power transistor and the voltage at the bridge arm middle point, a current value when the inductor is charged. Because no device with a relatively complex structure, such as a current transformer and an auxiliary winding, is disposed in the detection circuit, based on the detection circuit, the totem-pole power factor correction circuit, and the power supply module in which the totem-pole power factor correction circuit is located that are provided in this embodiment of this application, structural complexity can be reduced, and the costs can be reduced, thereby reducing space occupied by the device.

In an embodiment of the first aspect of this application, the second detection circuit includes a first voltage detection circuit, a first edge detection circuit, a second comparator, and a first AND logic circuit. The second detection circuit is configured to: detect a characteristic value of the first voltage at the bridge arm middle point, and send the characteristic value of the first voltage to the second comparator. The second comparator is configured to send a first intermediate signal to the first edge detection circuit when the voltage value of the first voltage is greater than the second predetermined value. The first edge detection circuit is configured to send a second intermediate signal to the first AND logic circuit on a rising edge or a falling edge of the first intermediate signal. The first AND logic circuit is configured to send a second protection signal to the control circuit based on the second intermediate signal and the control signal. The control circuit controls, based on the second protection signal, the drive circuit to drive the power transistor to be turned off. Therefore, based on the totem-pole power factor correction circuit provided in this embodiment of this application, the detection circuit can relatively directly detect the voltage value at the bridge arm middle point. In this way, when the control circuit controls the drive circuit to drive the power transistor to be turned on, in response to the first voltage at the bridge arm middle point being greater than the second predetermined value, the control circuit can control, in time based on a detection result of the detection circuit, the drive circuit to drive the power transistor to be turned off, thereby protecting the power transistor. Because the detection circuit disposed in this embodiment of this application can relatively directly detect the current between the power transistor and the bridge arm middle point, it is not necessary to dispose a device with a relatively complex structure, such as a current transformer and an auxiliary winding. In this way, based on the totem-pole power factor correction circuit and the power supply module in which the totem-pole power factor correction circuit is located that are provided in embodiments of this application, structural complexity can be reduced, and the costs can be reduced, thereby reducing space occupied by the device.

In an embodiment of the first aspect of this application, the characteristic value of the first voltage includes a change rate of the first voltage at die bridge arm middle point. The first voltage detection circuit includes a first capacitor and a first resistor. A first end of the first capacitor is connected to the bridge arm middle point. A second end of the first capacitor is connected to a first end of the first resistor and a first input end of the second comparator. A second end of the first resistor is grounded. A structure of the first voltage detection circuit provided in this embodiment is relatively simple. Therefore, based on the totem-pole power factor correction circuit and the power supply module in which the totem-pole power factor correction circuit is located that are provided in embodiments of this application, structural complexity can be reduced, the costs can be reduced, thereby reducing space occupied by a device.

In an embodiment of the first aspect of this application, the control circuit includes a reset signal generating circuit, a set signal generating circuit, and a control signal generating circuit. The reset signal generating circuit is configured to generate a reset signal of the power transistor. The set signal generating circuit is configured to generate a set signal of the power transistor. The control signal generating circuit is configured to send a control signal to the drive circuit based on the reset signal, the set signal, and the second protection signal, to control the drive circuit. In this embodiment, the control circuit may process the second protection signal through a relatively simple OR logic circuit. In this way, based on the control circuit, the totem-pole power factor correction circuit, and the power supply module in which the totem-pole power factor correction circuit is located that are provided in embodiments of this application, structural complexity can be reduced, and the costs can be reduced, thereby reducing space occupied by a device.

In an embodiment of the first aspect of this application, the control signal generating circuit includes a second OR logic circuit and a second flip-flop. The second OR logic circuit is configured to send a third intermediate signal to the second flip-flop based on the second protection signal and a reset signal of a first power transistor. The second flip-flop is configured to send a control signal to the drive circuit based on the third intermediate signal and a set signal of the first power transistor. A circuit structure of the control signal generating circuit in the control circuit provided in this embodiment is relatively simple. In this way, based on the control circuit, the totem-pole power factor correction circuit, and the power supply module in which the totem-pole power factor correction circuit is located that are provided in embodiments of this application, structural complexity can be reduced, and the costs can be reduced, thereby reducing space occupied by a device.

A second aspect of this application provides a power supply module, configured to: obtain an input voltage, and supply power to a load. The power supply module includes a direct-current conversion circuit and the totem-pole power factor correction circuit according to any one of the first aspect of this application. The totem-pole power factor correction circuit is configured to: obtain an input voltage, and provide an output voltage. The direct-current conversion circuit is configured to: perform voltage conversion on the output voltage, and then supply power to a load.

### BRIEF DESCRIPTION OF DRAWINGS

To describe technical solutions in embodiments of this application or in the prior art more clearly, the following briefly describes the accompanying drawings required for describing embodiments or the prior art. Apparently, the accompanying drawings in the following description show some embodiments of this application, and persons of ordinary skill in the art may still derive other drawings from these accompanying drawings without creative efforts.
FIG. 1 is a schematic diagram depicting a structure of an electronic device according to an embodiment of this application;
FIG. 2 is a schematic diagram depicting a structure of an electronic device according to an embodiment of this application;
FIG. 3 is a schematic diagram depicting a structure of a power supply module according to an embodiment of this application;
FIG. 4 is a schematic diagram depicting a structure of a power supply module;
FIG. 5 is a schematic diagram depicting a structure of an embodiment of a totem-pole power factor correction circuit according to this application;
FIG. 6 is a schematic diagram depicting a structure of an embodiment of a totem-pole power factor correction circuit according to this application;
FIG. 7 is a schematic diagram depicting a structure of an embodiment of a first detection circuit according to this application;
FIG. 8 is a schematic diagram of an embodiment of control logic of driving of a drive circuit according to this application;
FIG. 9 is a schematic diagram of another embodiment of control logic of driving of a drive circuit according to this application;
FIG. 10 is a schematic diagram depicting a structure of an embodiment of a totem-pole power factor correction circuit according to this application;
FIG. 11 is a schematic diagram depicting a structure of an embodiment of a totem-pole power factor correction circuit according to this application;
FIG. 12 is a schematic diagram depicting a structure of an embodiment of a third detection circuit according to this application;
FIG. 13 is a schematic diagram of an embodiment of control logic of a control circuit according to this application;
FIG. 14 is a schematic diagram of an embodiment of control logic of a control circuit according to this application;
FIG. 15 is a schematic diagram of an embodiment of control logic of a control circuit according to this application;
FIG. 16 is a schematic diagram depicting a structure of an embodiment of a control circuit according to this application; and
FIG. 17 is a schematic diagram of control logic of a control circuit according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by persons of ordinary skill in the art based on embodiments of this application without creative efforts shall fall within the protection scope of this application.

In this specification, claims, and accompanying drawings of this application, terms "first", "second", "third", "fourth", and the like (if existent) are intended to distinguish between similar objects but do not necessarily indicate a specific order or sequence. It should be understood that the data used in such a way is interchangeable in a proper circumstance, so that embodiments of this application described herein can be, for example, implemented in other orders than the order illustrated or described herein. In addition, the terms "include", "have", and any other variant thereof are intended to cover a non-exclusive inclusion. For example, a process, method, system, product, or device that includes a list of steps or units is not necessarily limited to those steps or units that are expressly listed, but may include other steps or units that are not expressly listed or are inherent to the process, method, product, or device.

A connection relationship described in this application means a direct connection or an indirect connection. For example, a connection between A and B may be either a direct connection between A and B, or an indirect connection between A and B through one or more other electrical components. For example, the connection between A and B may be that A and C are directly connected, C and B are directly connected. In this way, A and B are connected through C. It may be further understood that "A is connected to B" described in this application may be either a direct connection between A and B, or an indirect connection between A and B through one or more other electrical components.

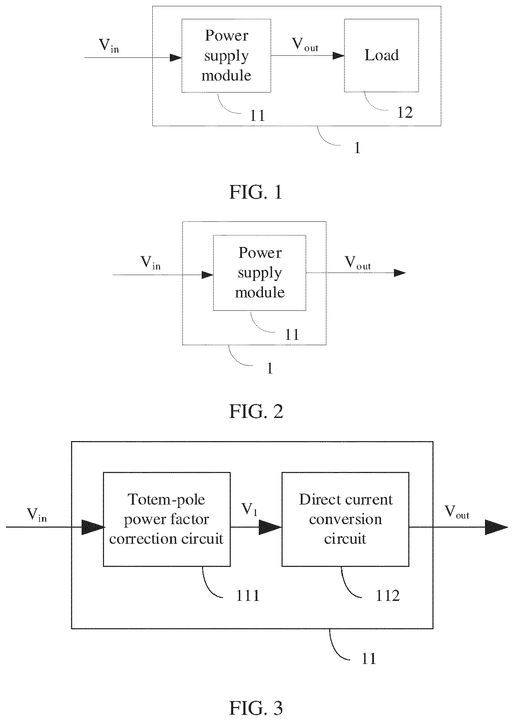

FIG. 1 is a schematic diagram depicting a structure of an electronic device according to an embodiment of this application. As shown in FIG. 1, the electronic device 1 includes a power supply module 11 and a load 12. The power supply module 11 is configured to: receive an input voltage Vᵢₙ, and provide an output voltage Vₒᵤₜ to supply power to the load 12. In an embodiment, the input voltage Vᵢₙ may be provided by an external power supply, or may be provided by an internal power supply of the electronic device 1.

The electronic device 1 provided in the embodiment shown in FIG. 1 may be an electric device such as a mobile phone, a notebook computer, a computer case, a television, a smart tablet, an interactive tablet, an electric vehicle, a smart furniture device, a smartwatch, or a wearable device. The power supply module 11 provided in this embodiment of this application may be applied to the electronic device 1 shown in FIG. 1.

FIG. 2 is a schematic diagram depicting a structure of an electronic device according to an embodiment of this application. As shown in FIG. 2, the electronic device 1 includes a power supply module 11. The power supply module 11 is configured to: receive an input voltage Vᵢₙ, and provide an output voltage Vₒᵤₜ to supply power to a load connected to the electronic device 1. In an embodiment, the input voltage Vᵢₙ may be provided by an external power supply, or may be provided by an internal power supply of the electronic device 1.

As shown in FIG. 2, the electronic device 1 provided in this embodiment may be a power supply device such as a power adapter, a charger, a car charging station, or a mobile power supply. The power supply module provided in this embodiment of this application may be used in the electronic device 1 shown in FIG. 2.

In an embodiment of this application, the electronic device 1 may alternatively include a plurality of power supply modules 11, and the plurality of power supply modules 11 provide an output voltage Vₒᵤₜ to supply power to the load 12. In an embodiment of this application, the electronic device 1 may include a plurality of loads 12, and the power supply module 11 provides a plurality of output voltages Vₒᵤₜ to supply power respectively to the plurality of loads 12. In an embodiment of this application, the electronic device 1 may include a plurality of power supply modules 11 and a plurality of loads 12, and the plurality of power supply modules 11 respectively provide a plurality of output voltages Vₒᵤₜ to supply power to the plurality of loads 12.

In an embodiment of this application, the input voltage Vᵢₙ may be alternating-current, and the power supply module 11 may include an alternating current-direct current conversion circuit. In this embodiment of this application, the input voltage Vᵢₙ may be direct-current, the internal power supply may include an energy storage apparatus, and the power supply module 11 may include a direct-current conversion circuit. Correspondingly, when the electronic device 1 works independently, the energy storage apparatus of the internal power supply may supply power to the power supply module 11.

In an embodiment of this application, the input voltage Vᵢₙ may be direct-current. The load 12 of the electronic device 1 may include one or more of an electric apparatus, an energy storage apparatus, or an external device. In an embodiment, the load 12 may be an electric apparatus of the electronic device 1, for example, a processor or a display. In an embodiment, the load 12 may be an energy storage apparatus of the electronic device 1, for example, a battery. In an embodiment, the load 12 may be an external device of the electronic device 1, for example, another electronic device such as a display or a keyboard.

FIG. 3 is a schematic diagram depicting a structure of a power supply module according to an embodiment of this application. The power supply module 11 shown in FIG. 3 may be applied to the electronic device 1 shown in FIG. 1 or FIG. 2. The power supply module 11 includes: a totem-pole power factor correction circuit (power factor correction, PFC) 111 and a direct-current conversion circuit 112. The power supply module 11 is configured to: receive an input voltage Vᵢₙ, perform power factor correction, and then provide an output voltage Vₒᵤₜ. The input voltage Vᵢₙ is alternating-current, and the output voltage Vₒᵤₜ is direct-current.

The totem-pole power factor correction circuit 111 is configured to: receive the input voltage Vᵢₙ of the power supply module 11, rectify the input voltage Vᵢₙ of the power supply module 11, perform power factor correction, and then provide an output voltage V₁ for the direct-current conversion circuit 112. The output voltage V₁ of the totem-pole power factor correction circuit 111 is direct-current. Circuit parameters, for example, phases of the output voltage V₁ of the totem-pole power factor correction circuit 111 and the input voltage Vᵢₙ of the totem-pole power factor correction circuit 111 are different. In an embodiment, a voltage value of the input voltage Vᵢₙ of the totem-pole power factor correction circuit 111 may be equal to a voltage value of the output voltage V₁ of the totem-pole power factor correction circuit 111. Alternatively, a voltage value of the input voltage Vᵢₙ of the totem-pole power factor correction circuit 111 is greater than a voltage value of the output voltage V i of the totem-pole power factor correction circuit 111.

The direct-current conversion circuit 112 is configured to: receive the output voltage V₁ of the totem-pole power factor correction circuit 111, perform voltage conversion on the output voltage V₁, and then provide the output voltage Vₒᵤₜ of the power supply module 11. The direct-current conversion circuit 112 may be a circuit with an isolation function. For example, the direct-current conversion circuit 112 may be one of an asymmetrical half-bridge (asymmetrical half-bridge, AHB) flyback conversion circuit or an active clamp flyback (active clamp flyback, ACF) conversion circuit. Alternatively, the direct-current conversion circuit 112 may be a circuit with a non-isolation function. For example, the direct-current conversion circuit 112 may be one of a boost (Boost) circuit, a buck (Buck) circuit, or a buck-boost (Buck-Boost) circuit.

The totem-pole power factor correction circuit 111 includes a control circuit, at least one inductor, and at least one switching transistor. The control circuit may be configured to send a control signal to the at least one switching transistor, so that the at least one switching transistor is turned on or turned off based on the control signal, to control the at least one inductor to be charged or discharged through the switching transistor that is turned on. When the at least one inductor is charged, the input voltage Vᵢₙ of the totem-pole power factor correction circuit 111 charges the at least one inductor. When the at least one inductor is discharged, the at least one inductor provides the output voltage V₁ for the direct-current conversion circuit 112. The control circuit may adjust a power factor of the output voltage of the totem-pole power factor correction circuit 111 by adjusting a charging time and/or a discharging time of at least one capacitor.

In an embodiment, the control circuit of the totem-pole power factor correction circuit 111 may be a pulse-width modulation (Pulse-width modulation, PWM) controller, a central processing unit (central processing unit, CPU), another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, or the like.

In an embodiment, the switching transistor of the totem-pole power factor correction circuit 111 may be any one of a metal-oxide-semiconductor field-effect transistor (Metal-Oxide-Semiconductor Field-Effect Transistor, MOSFET), an insulated gate bipolar transistor (Insulated Gate Bipolar Transistor, IGBT), a bipolar power transistor (bipolar power transistor), or a wide bandgap semiconductor field-effect transistor.

In an embodiment, a drive manner of the switching transistor is turning on at a high level and turning off at a low level. For example, the control circuit sends a high-level control signal to the switching transistor, and the switching transistor is turned on based on the control signal. The control circuit sends a low-level control signal to the switching transistor, and the switching transistor is turned off based on the control signal. Alternatively, the control circuit does not send a control signal to the switching transistor, and the switching transistor is turned off when no control signal is received. It may be understood that, in this embodiment of this application, the switching transistor may be alternatively driven in another manner. A drive manner of the switching transistor is not limited in this embodiment of this application.

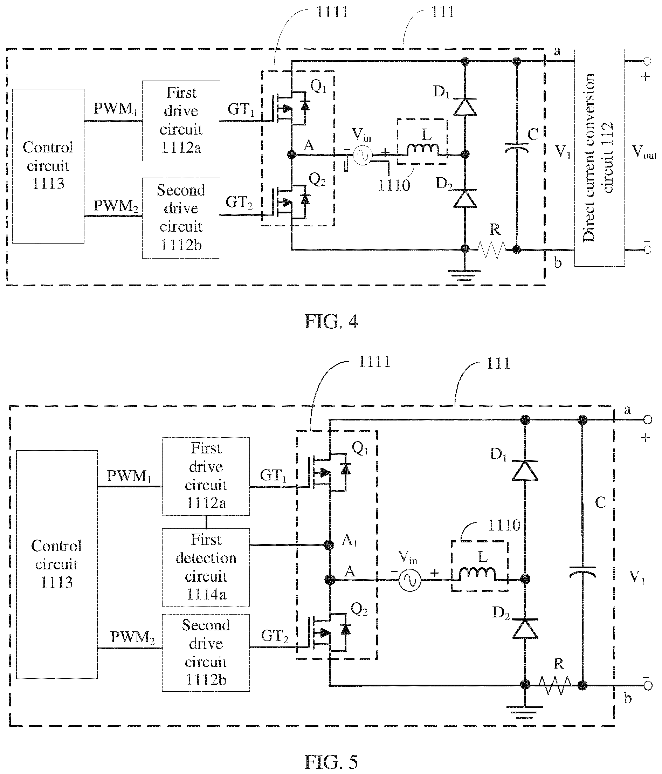

FIG. 4 is a schematic diagram depicting a structure of a power supply module. The power supply module shown in FIG. 4 includes a totem-pole power factor correction circuit 111 and a direct-current conversion circuit 112. The totem-pole power factor correction circuit 111 is configured to: receive an input voltage Vᵢₙ, perform rectification and power factor correction, and provide an output voltage V₁ to the direct-current conversion circuit 112.

A bridgeless totem-pole power factor correction circuit is used as an example of the totem-pole power factor correction circuit 111 provided in FIG. 4. The totem-pole power factor correction circuit 111 includes an inductor 1110 and a half-bridge circuit 1111. The half-bridge circuit 1111 includes a first switch Qi and a second switch Q₂. A bridge arm middle point A of the half-bridge circuit 1111 is connected to a negative electrode of the input voltage Vᵢₙ. The half-bridge circuit 1111 is further connected in parallel between an interface a and an interface b of an output end of the totem-pole power factor correction circuit 111.

Acontrol circuit 1113 is configured to control, through a first drive circuit 1112a, the first switch Q₁ to be turned on or turned off. The control circuit 1113 sends a first control signal PWM₁ to the first drive circuit 1112a. The first drive circuit 1112a sends a first drive signal GTi to the first switch Qi based on the first control signal PWM₁. The first switch Qi is turned on based on the first drive signal GT₁.

In some embodiments, a level shift (level shift) circuit may be further disposed between the control circuit 1113 and the first drive circuit 1112a, and is configured to: perform level shift on the first control signal PWM₁ output by the control circuit 1113, and send a processed signal to the first drive circuit 1112a, to implement an isolation function and protect the first drive circuit 1112a.

The control circuit 1113 is configured to control, through a second drive circuit 1112b, the second switch Q₂ to be turned on or turned off. The control circuit 1113 sends a second control signal PWM₁ to the second drive circuit 1112b. The second drive circuit 1112b sends a second drive signal GTz to the second switch Qz based on the second control signal PWMz. The second switch Qz is turned on based on the second drive signal GTz.

When the input voltage Vᵢₙ received by the totem-pole power factor correction circuit 111 is on a positive half axis, the first switch Qi is turned on, and the second switch Qz is turned off, the input voltage Vᵢₙ charges an inductor L. When the input voltage Vᵢₙ received by the totem-pole power factor correction circuit 111 is on the positive half axis, the first switch Q₁ is turned off, and the second switch Qz is turned on, the inductor L is discharged and provides the output voltage V i to the direct-current conversion circuit 112. When the input voltage Vᵢₙ received by the totem-pole power factor correction circuit 111 is on a negative half axis, the first switch Q₁ is turned off, and the second switch Qz is turned on, the input voltage Vᵢₙ charges the inductor L. When the input voltage Vᵢₙ received by the totem-pole power factor correction circuit 111 is on the negative half axis, the first switch Qi is turned on, and the second switch Qz is turned off, the inductor L is discharged and provides the output voltage V i to the direct-current conversion circuit 112.

In some embodiments, a switch turned on when the inductor L is charged is referred to as a primary power transistor, and a switch turned on when the inductor L is discharged is referred to as an auxiliary power transistor.

When a charging current i_{L} flowing through the inductor L is relatively large in a process in which the input voltage Vᵢₙ charges the inductor L, the primary power transistor is damaged. Therefore, the totem-pole power factor correction circuit 111 further includes a current detection circuit. The control circuit 1113 can determine, through the current detection circuit, a current value of the charging current i_{L} flowing through the inductor L. In addition, when the current value of the charging current i_{L} flowing through the inductor L is relatively large, the primary power transistor is turned off, and charging of the inductor L is stopped, to protect the primary power transistor.

In a conventional technology, the current detection circuit of the totem-pole power factor correction circuit 111 includes an apparatus configured to detect the charging current i_{L} flowing through the inductor L, such as a current transformer (current transformer, CT) or an auxiliary winding.

However, in the conventional technology, a structure of the current detection circuit is relatively complex. In this case, the costs of the totem-pole power factor correction circuit 111 and a power supply module 11 in which the totem-pole power factor correction circuit 111 is located are increased. In addition, devices such as a current transformer and an auxiliary winding in the current detection circuit have relatively large surface areas, and greatly occupy space. This is not conducive to a miniaturization design and power density improvement of the power supply module and an electronic device.

This embodiment of this application provides the totem-pole power factor correction circuit and the power supply module, to resolve a problem that a structure of the current detection circuit of the totem-pole power factor correction circuit 111 in the conventional technology is relatively complex, thereby reducing complexity of the structure of the current detection circuit and reducing the costs. In addition, technical effect can be further achieved, for example, a surface area of a device is reduced and occupied space is reduced. The following describes the technical solutions of this application in detail by using specific embodiments. For the following several specific embodiments, mutual reference may be made. Same or similar concepts or processes may be not described again in some embodiments.

FIG. 5 is a schematic diagram depicting a structure of an embodiment of a totem-pole power factor correction circuit according to this application. The totem-pole power factor correction circuit 111 shown in FIG. 5 may be used in the scenario shown in any one of FIG. 1 to FIG. 3. The totem-pole power factor correction circuit 111 shown in FIG. 5 includes an inductor L, a half-bridge circuit 1111, a control circuit 1113, two drive circuits 1112, and a first detection circuit 1114a.

The half-bridge circuit 1111 includes two power transistors that are denoted as a first switch Q₁ and a second switch Q₂. The inductor L is charged through the first switch Q₁ and discharged through the second switch Q, or the inductor L is discharged through the first switch Qi and charged through the second switch Q. Each drive circuit 1112 is configured to drive one power transistor to be turned on or turned off. The control circuit 1113 is configured to control the two drive circuits 1112. For example, the control circuit 1113 is configured to control, through a first drive circuit 1112a, the first switch Qi to be turned on or turned off. The control circuit 1113 sends a first control signal PWM₁ to the first drive circuit 1112a. The first drive circuit 1112a sends a first drive signal GTi to the first switch Qi based on the first control signal PWM₁. The first switch Qi is turned on based on the first drive signal GTi. The control circuit 1113 is configured to control, through a second drive circuit 1112b, the second switch Qz to be turned on or turned off. The control circuit 1113 sends a second control signal PWM₁ to the second drive circuit 1112b. The second drive circuit 1112b sends a second drive signal GTz to the second switch Q₂ based on the second control signal PWMz. The second switch Qz is turned on based on the second drive signal GTz.

The first detection circuit 1114a is configured to detect a first current at a point A₁ between the first switch Q₁ and the bridge arm middle point A of the half-bridge circuit 1111. In some embodiments, the first detection circuit 1114a includes a current sampling resistor disposed at the point A). In some embodiments, the first detection circuit 1114a may be configured to send a first protection signal to the first drive circuit 1112a when a current value of the first current is greater than a first predetermined value.

When the first drive circuit 1112a receives the first control signal PWM₁ sent by the control circuit 1113 and sends the first drive signal GTi to the first switch Qi based on the first control signal PWM₁, the first drive circuit 1112a stops sending the first drive signal GTi to the first switch Q₁ in response to the current value of the first current being greater than the first predetermined value, to drive the first switch Qi to be turned off.

When the first drive circuit 1112a receives the first control signal PWM₁ sent by the control circuit 1113 and sends the first drive signal GTi to the first switch Qi based on the first control signal PWM₁, the first drive circuit 1112a sends the first drive signal GTi to the first switch Q₁ in response to the current value of the first current being less than or equal to the first predetermined value, to drive the first switch Qi to be turned on.

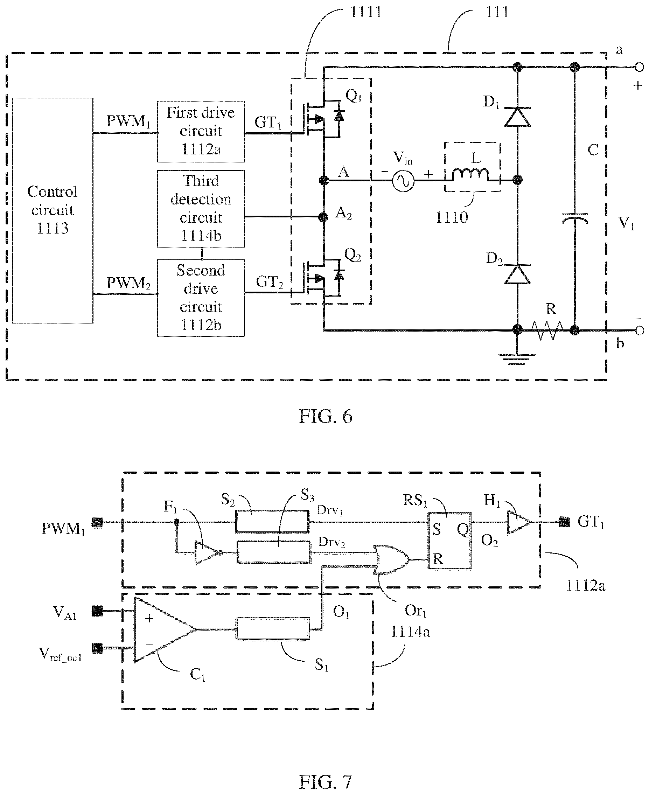

FIG. 6 is a schematic diagram depicting a structure of an embodiment of a totem-pole power factor correction circuit according to this application. The totem-pole power factor correction circuit 111 shown in FIG. 6 includes an inductor L, a half-bridge circuit 1111, a control circuit 1113, two drive circuits 1112, and a third detection circuit 1114b. The third detection circuit 1114b is configured to detect a second current at a point A₂ between a second switch Qz and a bridge arm middle point A of the half-bridge circuit 1111. In some embodiments, the third detection circuit 1114ba includes a current sampling resistor disposed at the point A₂. In some embodiments, the third detection circuit 1114b may be configured to send a third protection signal to a second drive circuit 1112b when a current value of the second current is greater than a first predetermined value.

When a third drive circuit 1112b receives a second control signal PWM₂ sent by the control circuit 1113 and sends a second drive signal GTz to the second switch Qz based on the second control signal PWM₂, the second drive circuit 1112b stops sending the second drive signal GTz to the second switch Qz in response to the current value of the second current being greater than the first predetermined value, to drive the second switch Q₂ to be turned off.

When the third drive circuit 1112b receives the second control signal PWMz sent by the control circuit 1113 and sends the second drive signal GTz to the second switch Qz based on the second control signal PWMz, the second drive circuit 1112b sends the second drive signal GTz to the second switch Qz in response to the current value of the second current being less than or equal to the first predetermined value, to drive the second switch Qz to be turned on.

In an embodiment, the totem-pole power factor correction circuit 111 may further include both the first detection circuit 1114a shown in FIG. 5 and the third detection circuit 1114b shown in FIG. 6.

In conclusion, based on the totem-pole power factor correction circuit provided in this embodiment of this application, a current value corresponding to a case in which the inductor L is charged can be detected relatively directly through a detection circuit. Therefore, when a control circuit controls a drive circuit to drive a power transistor to be turned on, in response to a value of a current flowing through the inductor L being greater than the first predetermined value, the drive circuit can drive, in time based on a detection result of the detection circuit, the power transistor to be turned off, to protect the power transistor. Because the detection circuit disposed in this embodiment of this application can relatively directly detect the current between the power transistor and the bridge arm middle point, it is not necessary to dispose a device with a relatively complex structure, such as a current transformer and an auxiliary winding. In this way, based on the totem-pole power factor correction circuit and the power supply module in which the totem-pole power factor correction circuit is located that are provided in embodiments of this application, structural complexity can be reduced, and the costs can be reduced, thereby reducing space occupied by the device.

FIG. 7 is a schematic diagram depicting a structure of an embodiment of a first detection circuit according to this application. In FIG. 7, the first drive circuit 1112a and the first detection circuit 1114a shown in FIG. 5 are used as an example to describe a structure of a detection circuit configured to detect a first current between a power transistor and a bridge arm middle point in a totem-pole power factor correction circuit 111.

As shown in FIG. 7, the first detection circuit 1114a includes a first comparator C₁. The first drive circuit 1112a includes a first phase inverter Fi, a first OR logic circuit On, a first flip-flop RS₁, and a first buffer H). A positive input end of the first comparator C₁ is connected to a point A₁ between a first switch Qi and a bridge arm middle point A. A negative input end of the first comparator C₁ is configured to receive a comparison signal of a first predetermined value. An output end of the first comparator C₁ is connected to a first input end of the first OR logic circuit On through a pulse generator S₁. An input end of the first phase inverter Fi is connected to a control circuit 1113, and is configured to receive a first control signal PWM₁. An output end of the first phase inverter F₂ is connected to a second input end of the first OR logic circuit On through a pulse generator S₃. An output end of the first OR logic circuit On is connected to a first end R of the first flip-flop RS₁, and a second end S of the first flip-flop RS₁ is configured to receive the first control signal PWM₁ through a pulse generator S₂. An output end of the first flip-flop RS₁ is connected to an input end of the first buffer H₁, and an output end of the first buffer H₁ is configured to output a first drive signal GTi.

In an embodiment, the first detection circuit 1114a may be configured to: detect a voltage value V_{A1} on a current sampling resistor disposed at the point A₁, and determine, based on the voltage value V_{A1} being greater than the comparison signal V_{ref_oc1} of the first predetermined value, that a current value of the first current is greater than the first predetermined value.

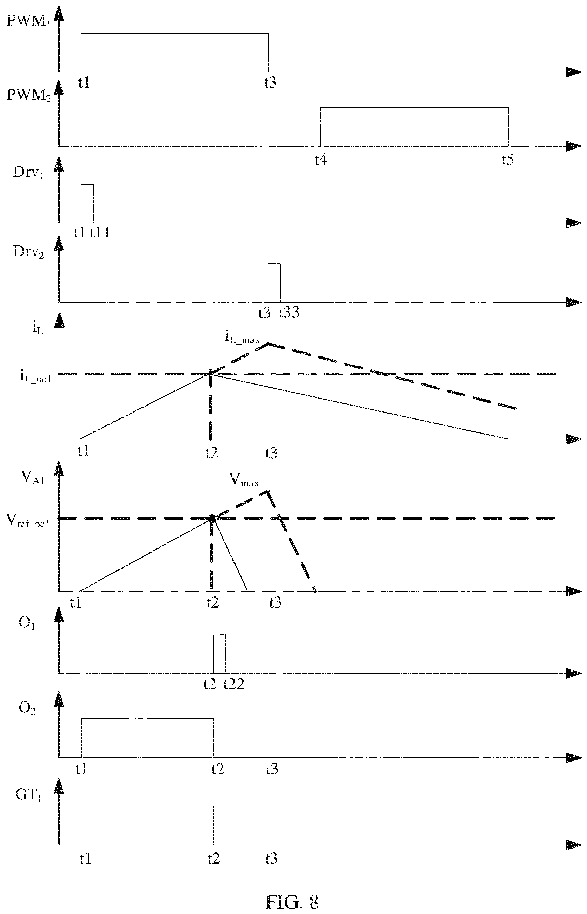

FIG. 8 is a schematic diagram of an embodiment of control logic of driving of a drive circuit according to this application. With reference to FIG. 8 and FIG. 7, the following describes control logic of sending a first protection signal to the first drive circuit 1112a by the first detection circuit 1114a based on the first current at the point A₁, and control logic of sending the first drive signal GTi to the first switch Qi by the first drive circuit 1114a based on the first protection signal and the first control signal PWM₁. The two types of control logic correspond to a case in which the current value of the first current is greater than the first predetermined value.

At a moment t₁, the first control signal PWM₁ sent by the control circuit 1113 to the first drive circuit 1112a is in a high level form, and lasts until a moment t3. The first drive signal GT₁ sent by the first drive circuit 1112a to the first switch Q₁ based on the first control signal PWM₁ is in a high level form. The first switch Q₁ is turned on based on the first drive signal GTi in a high level form, and an input voltage Vᵢₙ charges an inductor L. A first intermediate signal Drv₁ obtained after the first control signal PWM₁ passes through the pulse generator S₂ is in a high level form, and lasts for a period between the moment t₁ and a moment t₁₁. Because a charging current i_{L} of the inductor L is less than the first predetermined value i_{L_oc1}, and the voltage value V_{A1} on the current sampling resistor disposed at the point A₁ is less than the comparison signal V_{ref_oc1} of the first predetermined value, the first protection signal O₁ output by the first comparator C₁ to the first OR logic On through the pulse generator S₁ is a low-level signal. A first phase-inverted signal output by the first phase inverter F₁ to the first OR logic On based on the first control signal PWM₁ is in a low level form. A first OR logic signal sent by the first OR logic circuit On to the first flip-flop RS₁ based on the first phase-inverted signal and the first protection signal is in a low level form. A first flip-flop signal O₂ sent by the first flip-flop RS₁ to the first buffer H₁ based on the first OR logic signal and the first control signal PWM₁ is in a high level form. A first drive signal GT₁ sent by the first buffer H₁ based on the first flip-flop signal O₂ is in a high level form.

After the moment t₁, the first switch Q₁ is turned on, and the input voltage Vᵢₙ charges the inductor L through the first switch Qi. The charging current i_{L} of the inductor L gradually increases, and the voltage value V_{A1} on the current sampling resistor disposed at the point A₁ also gradually increases.

At a moment t2, the first control signal PWM₁ sent by the control circuit 1113 to the first drive circuit 1112a is still in the high level form. In this case, if the charging current i_{L} of the inductor L is greater than the first predetermined value i_{L-oc1}, and the voltage value V_{A1} on the current sampling resistor disposed at the point A₁ is greater than the comparison signal V_{ref_oc1} of the first predetermined value, the first protection signal O₁ output by the first comparator C₁ to the first OR logic On through the pulse generator S₁ is a high-level signal, and lasts for a period between the moment t₂ and a moment t₂₂. The first OR logic signal sent by the first OR logic circuit On to the first flip-flop RS₁ based on the first phase-inverted signal and the first protection signal is in a high level form. The first flip-flop signal O₂ sent by the first flip-flop RS₁ to the first buffer H₁ based on the first OR logic signal and the first control signal PWM₁ is in a low level form. The first drive signal GT₁ sent by the first buffer H₁ based on the first flip-flop signal O₂ is in a low level form.

After the moment t₂, the first switch Qi is turned off, and the inductor L is discharged through a body diode of the second switch Q₂. The charging current i_{L} of the inductor L gradually decreases, and the voltage value V_{A1} on the current sampling resistor disposed at the point A₁ also gradually decreases.

Between the moment tz and a moment t₃, although the first control signal PWM₁ sent by the control circuit 1113 to the first drive circuit 1112a is still in a high level form, the first drive signal GTi sent by the first drive circuit 1112a to the first switch Qi is in a low level form.

If the first drive signal GTi sent by the first drive circuit 1112a to the first switch Q₁ between the moment t₂ and the moment t₃ is in a high level form, the charging current i_{L} of the inductor L continues to increase until the charging current i_{L} increases to i_{L_max} at the moment t₃. As a result, the first switch Qi is damaged. However, in this embodiment, when the first drive signal GTi sent by the first drive circuit 1112a to the first switch Qi between the moment tz and the moment t₃ is in a low level form, the charging current i_{L} of the inductor L stops increasing after the moment t₂, so that the first switch Qi is turned off in advance to protect the first switch Q₁ when the charging current i_{L} of the inductor L is relatively large.

In an embodiment, the first predetermined value i_{L_oc1} and the comparison signal V_{ref_oc1} of the first predetermined value may be preset, or may be set by the first drive circuit 1112a. Specific values of the first predetermined value i_{L_oc1} and the comparison signal V_{ref_oc1} of the first predetermined value are not limited in this embodiment of this application.

After the moment t₃, the first control signal PWM₁ sent by the control circuit 1113 to the first drive circuit 1112a is in a low level form, and the first protection signal O₁ output by the first comparator C₁ to the first OR logic On through the pulse generator S₁ is a low-level signal. The first OR logic signal sent by the first OR logic circuit On to the first flip-flop RS₁ based on the first phase-inverted signal and the first protection signal is in a high level form. The first flip-flop signal O₂ sent by the first flip-flop RS₁ to the first buffer H₁ based on the first OR logic signal and the first control signal PWM₁ is in a low level form. The first drive signal GT₁ sent by the first buffer H₁ based on the first flip-flop signal O₂ is in a low level form. The first switch Q₁ is turned off, and the inductor L is discharged through the body diode of the second switch Q₂. The charging current i_{L} of the inductor L gradually decreases, and the voltage value V_{A1} on the current sampling resistor disposed at the point A₁ also gradually decreases.

Between a moment t₄ and a moment t₅, a second control signal PWM₂ sent by the control circuit 1113 to a second drive circuit 1112b is in a low level form. The second switch Q₂ is turned on, and the inductor L is discharged through the second switch Q₂. The charging current i_{L} of the inductor L gradually decreases, and the voltage value V_{A1} on the current sampling resistor disposed at the point A₁ also gradually decreases.

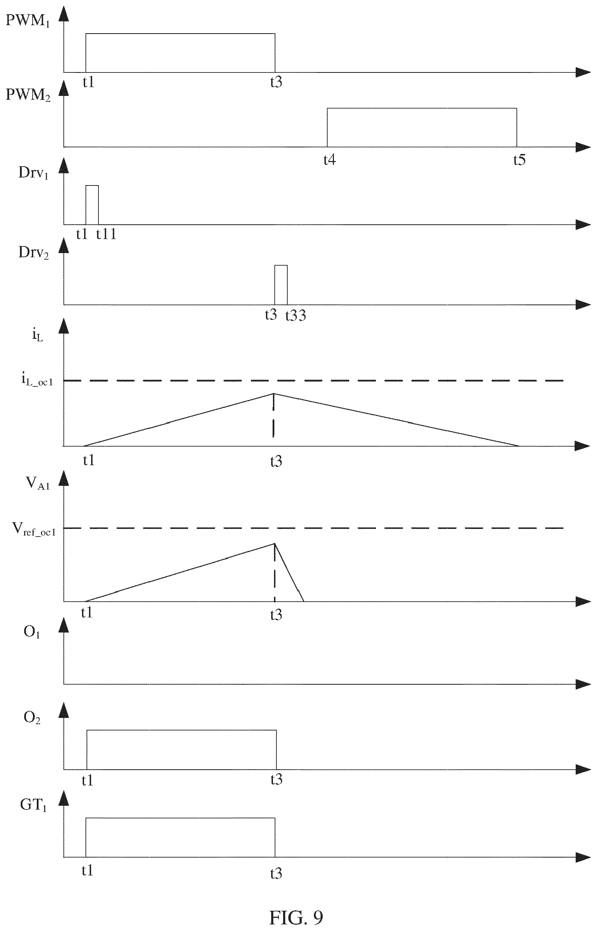

FIG. 9 is a schematic diagram of another embodiment of control logic of driving of a drive circuit according to this application. With reference to FIG. 9 and FIG. 7, the following describes control logic of sending the first drive signal GT₁ to the first switch Qi by the first drive circuit 1114a based on the first protection signal PWM₁ and the first control signal. The control logic corresponds to a case in which the current value of the first current is less than or equal to the first predetermined value.

At a moment t₁, the first control signal PWM₁ sent by the control circuit 1113 to the first drive circuit 1112a is in a high level form, and lasts until a moment t3. The first drive signal GTi sent by the first drive circuit 1112a to the first switch Q₁ based on the first control signal PWM₁ is in a high level form. The first switch Qi is turned on based on the first drive signal GTi in a high level form, and an input voltage Vᵢₙ charges an inductor L.

Between the moment t₁ and the moment t₃, a charging current i_{L} of the inductor L is less than the first predetermined value i_{L_oc1}, and the voltage value V_{A1} on the current sampling resistor disposed at the point A₁ is less than the comparison signal V_{ref_oc1} of the first predetermined value. The first protection signal O₁ output by the first comparator C₁ to the first OR logic On through the pulse generator S₁ is a low-level signal. A first phase-inverted signal output by the first phase inverter F₁ to the first OR logic On based on the first control signal PWM₁ is in a low level form. A first OR logic signal sent by the first OR logic circuit On to the first flip-flop RS₁ based on the first phase-inverted signal and the first protection signal is in a low level form. A first flip-flop signal O₂ sent by the first flip-flop RSi to the first buffer H₁ based on the first OR logic signal and the first control signal PWM₁ is in a high level form. The first drive signal GT₁ sent by the first buffer H₁ based on the first flip-flop signal O₂ is in a high level form.

Between the moment t₁ and the moment t₃, the first switch Q₁ is turned on, and the input voltage Vᵢₙ charges the inductor L through the first switch Q₁. The charging current i_{L} of the inductor L gradually increases, and the voltage value V_{A1} on the current sampling resistor disposed at the point A₁ also gradually increases. In addition, the charging current i_{L} of the inductor L does not exceed the first predetermined value i_{L_oc1}. Therefore, the charging current i_{L} of the inductor L does not cause damage to the first switch Q₁. The first drive signal GT₁ sent by the first drive circuit 1112a to the first switch Q₁ based on the received first control signal PWM₁ is in a high level form.

It should be noted that, in embodiments shown in FIG. 8 and FIG. 9, between the moment t₁ and a moment t₅, an input voltage Vᵢₙ of the totem-pole power factor correction circuit 111 is on a positive half axis, the first switch Q₁ is a primary power transistor, and the second switch Q₂ is an auxiliary power transistor. Therefore, when the input voltage Vᵢₙ charges the inductor L through the first switch Q₁, the first detection circuit 1114a shown in FIG. 5 may be configured to: when the charging current i_{L} of the inductor L is relatively large, control in time the first switch Q₁ to be turned off.

After the moment t₅, the input voltage Vᵢₙ of the totem-pole power factor correction circuit 111 is on a negative half axis, the second switch Q₂ is a primary power transistor, and the first switch Qi is an auxiliary power transistor. Therefore, when the input voltage Vᵢₙ charges the inductor L through the second switch Q₂, the second detection circuit 1114b shown in FIG. 6 may be configured to: when the charging current i_{L} of the inductor L is relatively large, control in time the second switch Q₂ to be turned off. A circuit structure and control logic of the second detection circuit 1114b are the same as the circuit structure and the control logic of the first detection circuit 1114a shown in FIG. 7, FIG. 8, and FIG. 9. Details are not described again.

In conclusion, based on the totem-pole power factor correction circuit provided in this embodiment of this application, a voltage at the power transistor and a voltage at the bridge arm middle point are directly detected through devices such as a comparator, a phase inverter, an OR logic circuit, and a flip-flop disposed in the detection circuit, to determine, based on the voltages, a current value when the inductor L is charged. Because no device with a relatively complex structure, such as a current transformer and an auxiliary winding, is disposed in the detection circuit, based on the detection circuit, the totem-pole power factor correction circuit, and the power supply module in which the totem-pole power factor correction circuit is located that are provided in embodiments of this application, structural complexity can be reduced, and the costs can be reduced, thereby reducing space occupied by the device.

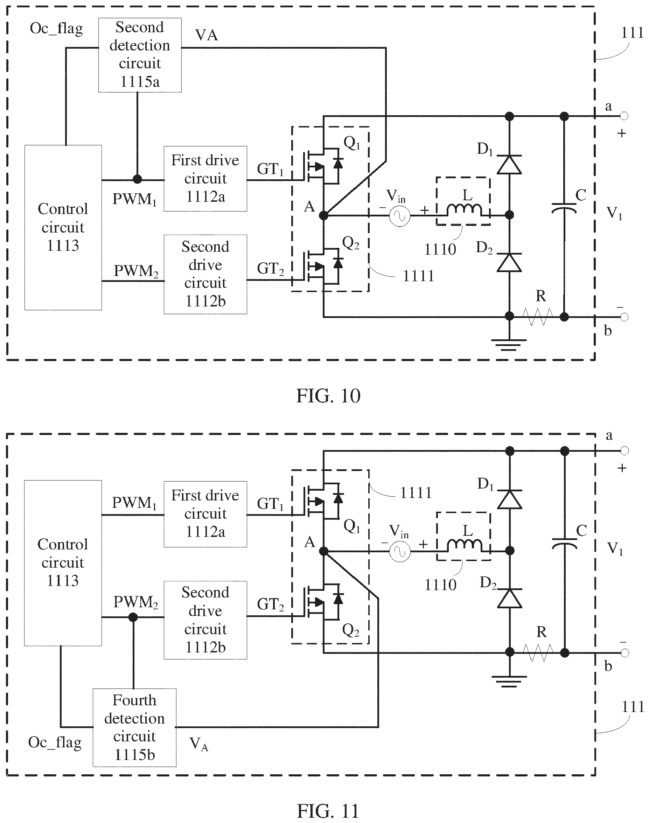

FIG. 10 is a schematic diagram depicting a structure of an embodiment of a totem-pole power factor correction circuit according to this application. The totem-pole power factor correction circuit 111 shown in FIG. 10 may be used in the scenario shown in any one of FIG. 1 to FIG. 3. The totem-pole power factor correction circuit 111 shown in FIG. 10 includes an inductor L, a half-bridge circuit 1111, a control circuit 1113, two drive circuits 1112, and a second detection circuit 1115a.

The half-bridge circuit 1111 includes two power transistors that are denoted as a first switch Qi and a second switch Q₂. The inductor L is charged through the first switch Q₁ and discharged through the second switch Q, or the inductor L is discharged through the first switch Qi and charged through the second switch Q. Each drive circuit 1112 is configured to drive one power transistor to be turned on or turned off. The control circuit 1113 is configured to control the two drive circuits 1112. For example, the control circuit 1113 is configured to control, through a first drive circuit 1112a, the first switch Qi to be turned on or turned off. The control circuit 1113 sends a first control signal PWM₁ to the first drive circuit 1112a. The first drive circuit 1112a sends a first drive signal GT₁ to the first switch Q₁ based on the first control signal PWM₁. The first switch Q₁ is turned on based on the first drive signal GT₁. The control circuit 1113 is configured to control, through a second drive circuit 1112b, the second switch Q₂ to be turned on or turned off. The control circuit 1113 sends a second control signal PWM₁ to the second drive circuit 1112b. The second drive circuit 1112b sends a second drive signal GT₂ to the second switch Q₁ based on the second control signal PWM₂. The second switch Q₂ is turned on based on the second drive signal GT₂.

The second detection circuit 1115a is configured to detect a first voltage at a bridge arm middle point A of the half-bridge circuit 1111. In some embodiments, the second detection circuit 1115a may be configured to send a second protection signal to the control circuit 1113 when a voltage value of the first voltage is greater than a second predetermined value.

When the control circuit 1113 sends the first control signal PWM₁ to the first drive circuit 1112a, the first drive circuit 1112a controls, based on the first control signal PWM₁, the first switch Q₁ to be turned on. In this case, in response to the voltage value of the first voltage being greater than the second predetermined value, the control circuit 1113 stops sending the first control signal PWM₁ to the first drive circuit 1112a, so that the first drive circuit 1112a controls the first switch Q₁ to be turned off.

When the control circuit 1113 sends the first control signal PWM₁ to the first drive circuit 1112a, the first drive circuit 1112a controls, based on the first control signal PWM₁, the first switch Q₁ to be turned on. In this case, in response to the voltage value of the first voltage being less than or equal to the second predetermined value, the control circuit 1113 sends the first control signal PWM₁ to the first drive circuit 1112a, so that the first drive circuit 1112a controls, based on the first control signal PWM₁, the first switch Q₁ to be turned on.

FIG. 11 is a schematic diagram depicting a structure of an embodiment of a totem-pole power factor correction circuit according to this application. The totem-pole power factor correction circuit 111 shown in FIG. 11 may be applied to the scenario shown in any one of FIG. 1 to FIG. 3. As shown in FIG. 10, the totem-pole power factor correction circuit 111 includes an inductor L, a half-bridge circuit 1111, a control circuit 1113, two drive circuits 1112, and a fourth detection circuit 1115b. The fourth detection circuit 1115b is configured to detect a first voltage at a bridge arm middle point A of the half-bridge circuit 1111. In some embodiments, the fourth detection circuit 1115b may be configured to send a fourth protection signal to the control circuit 1113 when a voltage value of the first voltage is greater than a second predetermined value.

When the control circuit 1113 sends a second control signal PWMz to the second drive circuit 1112b, the second drive circuit 1112b controls, based on the second control signal PWM₂, a second switch Q₂ to be turned on. In this case, in response to the voltage value of the first voltage being greater than the second predetermined value, the control circuit 1113 stops sending the second control signal PWM₂ to the second drive circuit 1112b, so that the second drive circuit 1112b controls the second switch Qz to be turned off.

When the control circuit 1113 sends the second control signal PWM₂ to the second drive circuit 1112b, the second drive circuit 1112b is enabled to control, based on the second control signal PWM₂, the second switch Q₂ to be turned on. In this case, in response to the voltage value of the first voltage being less than or equal to the second predetermined value, the control circuit 1113 sends the second control signal PWMz to the second drive circuit 1112b, so that the second drive circuit 1112b controls, based on the second control signal PWMz, the second switch Q₂ to be turned on.

In an embodiment, the totem-pole power factor correction circuit 111 may further include both the second detection circuit 1115a shown in FIG. 10 and the fourth detection circuit 1115b shown in FIG. 6.

In conclusion, based on the totem-pole power factor correction circuit provided in this embodiment of this application, the detection circuit can relatively directly detect the voltage value at the bridge arm middle point. In this way, when the control circuit controls the drive circuit to drive the power transistor to be turned on, in response to the first voltage at the bridge arm middle point being greater than the second predetermined value, the control circuit can control, in time based on a detection result of the detection circuit, the drive circuit to drive the power transistor to be turned off, thereby protecting the power transistor. Because the detection circuit disposed in this embodiment of this application can relatively directly detect the current between the power transistor and the bridge arm middle point, it is not necessary to dispose a device with a relatively complex structure, such as a current transformer and an auxiliary winding. In this way, based on the totem-pole power factor correction circuit and the power supply module in which the totem-pole power factor correction circuit is located that are provided in embodiments of this application, structural complexity can be reduced, and the costs can be reduced, thereby reducing space occupied by the device.

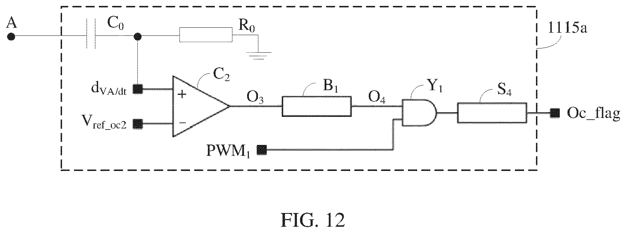

FIG. 12 is a schematic diagram depicting a structure of an embodiment of a third detection circuit according to this application. In FIG. 12, the first drive circuit 1112a and the second detection circuit 1115a shown in FIG. 10 are used as an example to describe a structure of a detection circuit configured to detect a first voltage at a bridge arm middle point in a totem-pole power factor correction circuit 111.

As shown in FIG. 12, the second detection circuit 1115a includes: a first voltage detection circuit, a second comparator C₂, a first edge detection circuit B₁, and a first AND logic circuit Y₁. One end of the first voltage detection circuit is connected to a bridge arm middle point A, and the other end of the first voltage detection circuit is connected to a first input end of the second comparator C₂. A second input end of the second comparator C₂ is configured to receive a comparison signal V_{ref_oc2} of a second predetermined value. An output end of the second comparator C₂ is connected to an input end of the first edge detection circuit B₁. An output end of the first edge detection circuit B₁ is connected to a first input end of the first AND logic circuit Y₁. A second input end of the first AND logic circuit Y₁ is configured to receive a first control signal PWM₁. An output end of the first AND logic circuit Y₁ outputs a second protection signal Oc_flag through a pulse generator S₄.

In an embodiment, the first voltage detection circuit is configured to detect a change rate of a first voltage at the bridge arm middle point A. The first voltage detection circuit includes a first capacitor C₀ and a first resistor R₀. A first end of the first capacitor C₀ is connected to the bridge arm middle point A, a second end of the first capacitor C₀ is connected to a first end of the first resistor R₀ and a first input end of the second comparator C₂, and a second end of the first resistor R₀ is grounded. In another embodiment, the first voltage detection circuit may be alternatively implemented in a manner of resistive voltage division detection, capacitive voltage division detection, or the like. A specific implementation of the first voltage detection circuit is not limited in this embodiment of this application.

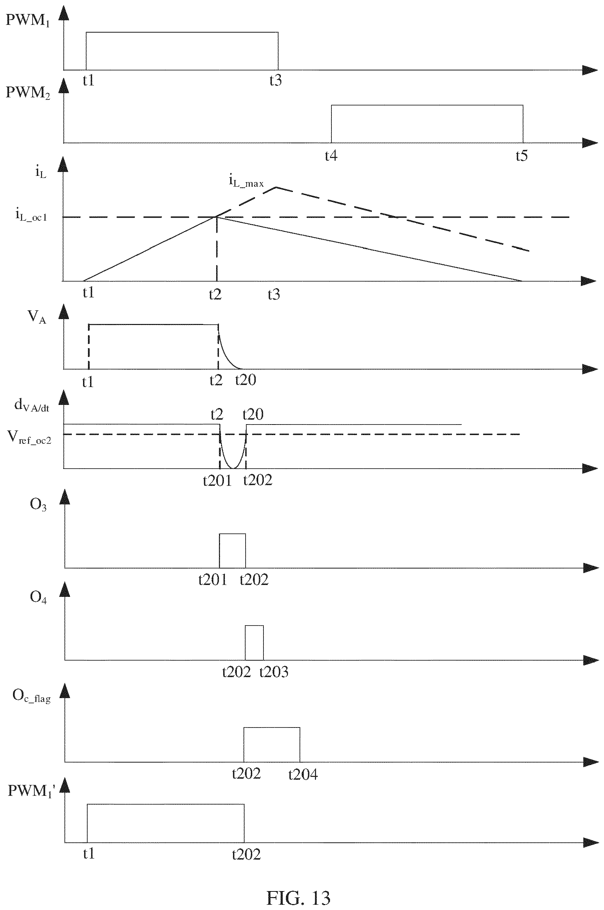

FIG. 13 is a schematic diagram of an embodiment of control logic of a control circuit according to this application. With reference to FIG. 13 and FIG. 12, the following describes control logic of sending the second protection signal to a control circuit 1113 by the second detection circuit 115a, and control logic of stopping sending the first control signal PWM₁ to a first switch Q₁ by the control circuit 1113 based on the second protection signal. The two types of control logic correspond to a case in which a voltage value of the first voltage is greater than a second predetermined value.

At a moment t₁, the first control signal PWM₁ sent by the control circuit 1113 to the first drive circuit 1112a is in a high level form. A first drive signal GT₁ sent by the first drive circuit 1112a to the first switch Q₁ based on the first control signal PWM₁ is in a high level form. The first switch Q₁ is turned on based on the first drive signal GT₁ in a high level form, and an input voltage Vᵢₙ charges an inductor L.

After the moment t₁, the first switch Q₁ is turned on, the input voltage Vᵢₙ charges the inductor L through the first switch Q₁, and a charging current i_{L} of the inductor L gradually increases.

At a moment t₂, with reference to the description in FIG. 8 and FIG. 9, the charging current i_{L} of the inductor L increases to be greater than the first predetermined value i_{L_oc1}, and the first drive signal GT₁ sent by the first drive circuit 1112a to the first switch Q₁ is in a low level form, so that the first switch Q₁ is turned off, thereby protecting the first switch Q₁.

After the moment t₂, because the first switch Q₁ is turned off, the inductor L is discharged through a body diode of a second switch Q₂. The charging current i_{L} of the inductor L gradually decreases. A voltage value V_{A} at the point A also gradually decreases from the moment t₂, and lasts until a moment t₂₀.

The first input end of the second comparator C₂ may learn, through the first voltage detection circuit, that a change rate d_{VA}/dₜ of the voltage value V_{A} at the point A first decreases and then increases between the moment t₃ and the moment t₃₀. Between a moment t₂₀₁ to a moment t₂₀₂, the change rate d_{VA}/dₜ of the voltage value V_{A} at the point A is less than the comparison signal V_{ref_oc2} of the second predetermined value. Therefore, a first intermediate signal O₃ output by the second comparator to the first edge detection circuit B₁ between the moment t₂₀₁ and the moment t₂₀₂ is in a high level form. A second intermediate signal Or sent by the first edge detection circuit B₁ to the first AND logic circuit Y₁ based on a falling edge at the moment t₂₀₂ is in a high level form, and lasts until a moment t₂₀₃. The second protection signal Oc_flag output by the first AND logic circuit Y₁ through the pulse generator S₄ based on the second intermediate signal Or and the first control signal PWM₁ is in a high level form, and lasts until a moment t₂₀₄.

At the moment t₂₀₂, when the control circuit 1113 receives the second protection signal Oc_flag, the first control signal PWM₁ sent to the first drive circuit 1112a is in a low level form, so that the first drive signal GT₁ sent by the first drive circuit 1112a to the first switch Q₁ is in a low level form.

With reference to the control logic in FIG. 8, when the charging current i_{L} of the inductor L increases to be greater than the first predetermined value i_{L_oc1} at the moment t₂, the first drive circuit 1112a may turn off the first switch Q₁ by sending the first drive signal GT₁ in a low level form to the first switch Q₁, thereby protecting the first switch Q₁. Subsequently, at the moment t₂₀₂, the first control signal PWM₁ sent by the control circuit 1113 to the first drive circuit 1112a is also in a low level form, to avoid a case in which the first drive circuit 1112a still receives the high-level first control signal PWM₁ when the first drive circuit 1112a does not drive the first switch Q₁, thereby further protecting the first switch Q₁ and the first drive circuit 1112a.

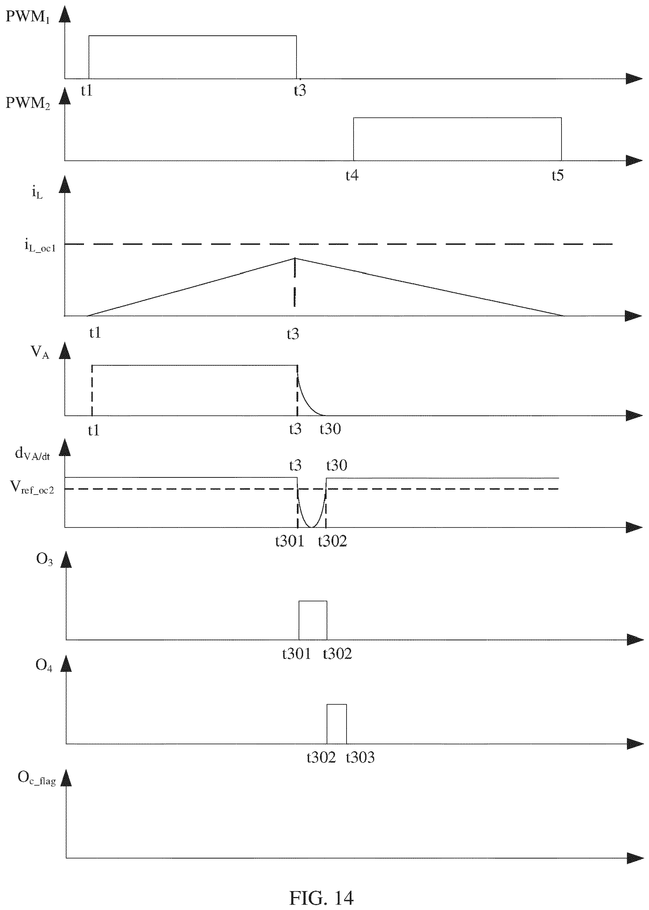

FIG. 14 is a schematic diagram of an embodiment of control logic of a control circuit according to this application. With reference to FIG. 14 and FIG. 12, the following describes control logic for sending the first control signal PWM₁ to a first switch Q₁ by a control circuit 1113. The control logic corresponds to a case in which a voltage value of the first voltage is less than or equal to the second predetermined value.

At a moment t₁, the first control signal PWM₁ sent by the control circuit 1113 to the first drive circuit 1112a is in a high level form. A first drive signal GT₁ sent by the first drive circuit 1112a to the first switch Q₁ based on the first control signal PWM₁ is in a high level form. The first switch Q₁ is turned on based on the first drive signal GT₁ in a high level form, and an input voltage Vᵢₙ charges an inductor L.

After the moment t₁, the first switch Q₁ is turned on, the input voltage Vᵢₙ charges the inductor L through the first switch Qi, and a charging current i_{L} of the inductor L gradually increases.

Between the moment t₁ and a moment t₃, a change rate d_{VA}/dₜ of a voltage value V_{A} at the point A is greater than the comparison signal V_{ref_oc2} of the second predetermined value. Therefore, a first intermediate signal O₃ output by the second comparator to the first edge detection circuit B₁ between the moment t₁ and the moment t₃ is in a low level form. A second intermediate signal O₄ sent by the first edge detection circuit B₁ to the first AND logic circuit Y₁ is in a low level form. The second protection signal Oc_flag output by the first AND logic circuit Y₁ through the pulse generator S₄ based on the second intermediate signal O₄ and the first control signal PWM₁ is in a low level form.

After the moment t₃, the first control signal PWM₁ sent by the control circuit 1113 to the first drive circuit 1112a is in a low level form. The first drive signal GT₁ sent by the first drive circuit 1112a to the first switch Q₁ based on the first control signal PWM₁ is in a low level form. The first switch Q₁ is turned off based on the first drive signal GT₁ in a low level form. The inductor L is discharged through a body diode of a second switch Q₂. A charging current i_{L} of the inductor L gradually decreases. The voltage value V_{A} of the point A also gradually decreases from the moment t₃, and lasts until a moment t₃₀.

The first input end of the second comparator C₂ may learn, through the first voltage detection circuit, that a change rate d_{VA}/dₜ of the voltage value V_{A} at the point A first decreases and then increases between the moment t₂ and the moment t₂₀. The first intermediate signal O₃ output by the second comparator to the first edge detection circuit B₁ between a moment t₃₀₁ and a moment t₃₀₂ is in a high level form. The second intermediate signal O₄ sent by die first edge detection circuit B₁ to the first AND logic circuit Y₁ based on a falling edge at the moment t₃₀₂ is in a high level form, and lasts until a moment t₃₀₃. However, because the first control signal PWM₁ is in a low level form, the second protection signal Oc_flag output by the first AND logic circuit Y₁ through the pulse generator S₄ is in a low level form.

In conclusion, based on the totem-pole power factor correction circuit provided in this embodiment of this application, a voltage at the bridge arm middle point is directly detected through devices such as a comparator, a phase inverter, an OR logic circuit, and a flip-flop disposed in the detection circuit, and the second protection signal is sent to the control circuit based on the voltage value, so that the control circuit stops sending the control signal to the drive circuit. Because no device with a relatively complex structure, such as a current transformer and an auxiliary winding, is disposed in the detection circuit, based on the detection circuit, the totem-pole power factor correction circuit, and the power supply module in which the totem-pole power factor correction circuit is located that are provided in embodiments of this application, structural complexity can be reduced, and the costs can be reduced, thereby reducing space occupied by the device.

It should be noted that, in embodiments shown in FIG. 13 and FIG. 14, between the moment t₁ and a moment t₅, an input voltage Vᵢₙ of the totem-pole power factor correction circuit 111 is on a positive half axis, the first switch Q₁ is a primary power transistor, and the second switch Q₂ is an auxiliary power transistor. When the input voltage Vᵢₙ charges the inductor L through the first switch Q₁, the second detection circuit 1115a shown in FIG. 5 may be configured to send a control signal to the control circuit 1113 when the first voltage at the bridge arm middle point A is relatively large.

After the moment t₅, the input voltage Vᵢₙ of the totem-pole power factor correction circuit 111 is on a negative half axis, the second switch Q₂ is a primary power transistor, and the first switch Qi is an auxiliary power transistor. Therefore, when the input voltage Vᵢₙ charges the inductor L through the second switch Q₂, the fourth detection circuit 1115b shown in FIG. 11 may be configured to send a control signal to the control circuit 1113 when the first voltage at the bridge arm middle point A is relatively large. A circuit structure and control logic of the fourth detection circuit 1115b are the same as the circuit structure and the control logic of the fourth detection circuit 1115a shown in FIG. 10, FIG. 13, and FIG. 14. Details are not described again.

In the foregoing embodiments, such as embodiments shown in FIG. 13 and FIG. 14, control logic of detecting a falling edge of the first intermediate signal O₃ and outputting the second intermediate signal O₄ by the first edge detection circuit B₁ is shown. In another embodiment, the first edge detection circuit B₁ may further detect a rising edge of the first intermediate signal O₃, and output the second intermediate signal O₄.

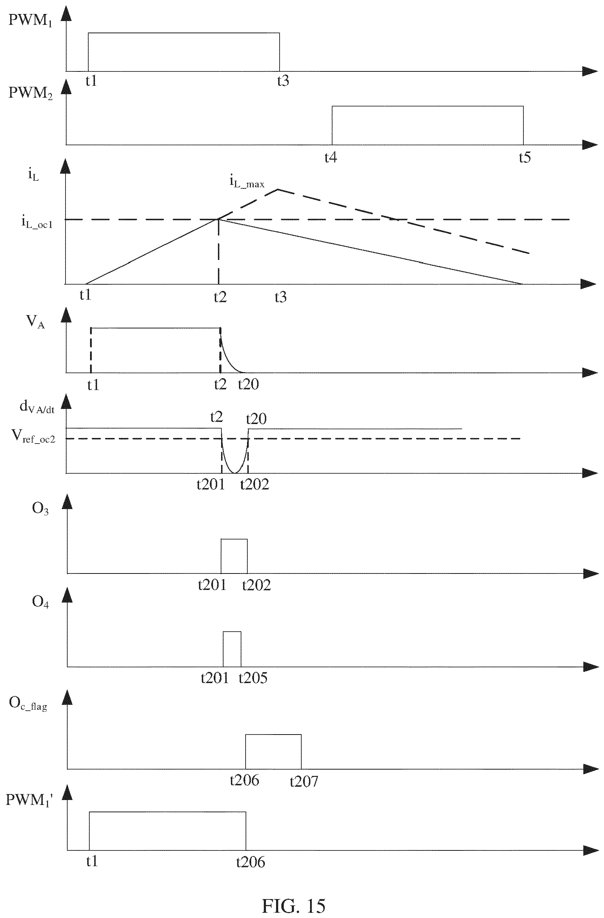

For example, FIG. 15 is a schematic diagram of an embodiment of control logic of a control circuit according to this application. As shown in FIG. 15, the first intermediate signal O₃ output by the second comparator to the first edge detection circuit B₁ between a moment t₂₀₁ and a moment t₂₀₂ is in a high level form. The second intermediate signal O₄ sent by the first edge detection circuit B₁ to the first AND logic circuit Y₁ based on the rising edge at the moment tzoi is in a high level form, and lasts until a moment tzos. The second protection signal Oc_flag output by the first AND logic circuit Y₁ through the pulse generator S₄ based on the second intermediate signal Or and the first control signal PWM₁ is in a high level form. A delay circuit may be further disposed at an output end of the first AND logic circuit Y₁, so that the second protection signal Oc_flag output by the first AND logic circuit Y₁ starts from a moment t₂₀₆ after the moment t₂₀₅ and lasts until a moment t₂₀₄. A delay time of the delay circuit may be set, for example, a period between the moment t₂₀₁ and the moment t₂₀₆ in the example in FIG. 15.

In an embodiment, the control circuit 1113 of the totem-pole power factor correction circuit 111 includes a reset signal generating circuit, a set signal generating circuit, and a control signal generating circuit. The reset signal generating circuit is configured to generate a reset signal Set_qh of a power transistor. The set signal generating circuit is configured to generate a set signal Reset_qh of the power transistor. The control signal generating circuit is configured to send a control signal to a drive circuit based on the reset signal Set_qh, the set signal Reset_qh, and the second protection signal Oc_flag.

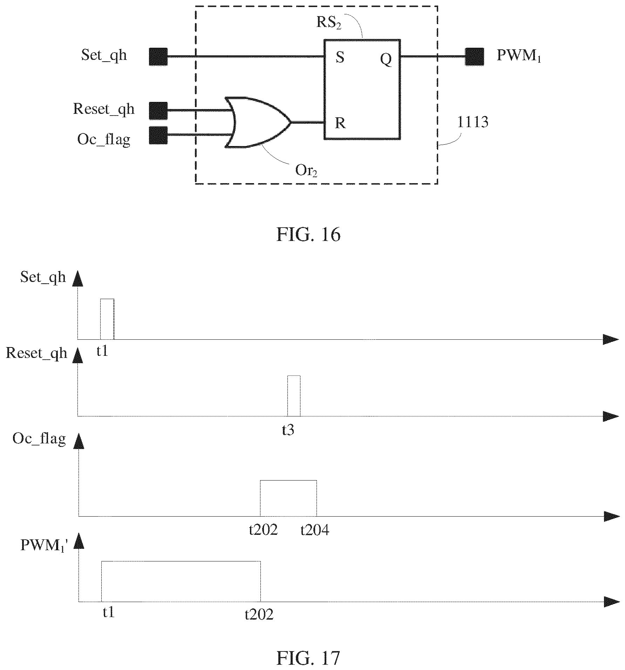

FIG. 16 is a schematic diagram depicting a structure of an embodiment of a control circuit according to this application. In the embodiment shown in FIG. 15, an example in which the control circuit 1113 controls a first drive circuit 1112a is used. The control signal generating circuit in the control circuit 1113 includes: a second OR logic circuit Or₂ and a second flip-flop RS₂. Two input ends of the second OR logic circuit Or₂ are respectively configured to receive the set signal Reset_qh and the second protection signal Oc_flag. An output end of the second OR logic circuit Or₂ is connected to a first input end of the second flip-flop RSz, a second input end of the second flip-flop RS₂ is configured to receive the reset signal Set_qh, and an output end of the second flip-flop RS₁ is configured to provide a first control signal PWM₁.

FIG. 17 is a schematic diagram of control logic of a control circuit according to this application. With reference to FIG. 17 and FIG. 16, the following describes control logic of sending the first control signal PWM₁ to the first drive circuit 1112a by the control circuit 1113 based on the reset signal Set_qh, the set signal Reset_qh, and the second protection signal Oc_flag.

The reset signal generating circuit generates, at a moment t₁, a reset signal Set_qh corresponding to a first switch Qi. In this case, at the moment t₁, a third intermediate signal output by the second OR logic circuit Or₂ is in a low level form, and the first control signal PWM₁ output by the second flip-flop RS₂ is in a high level form.

The set signal generating circuit generates, at a moment t₃, a set signal Reset_qh corresponding to the first switch Qi. It is assumed that the control circuit 1113 receives the second protection signal Oc_flag in the embodiment shown in FIG. 13. After the moment t₂₀₂, the third intermediate signal output by the second OR logic circuit Or₂ is in a high level form, and the first control signal PWM₁ output by the second trigger RSz is in a low level form. It is assumed that the control circuit 1113 receives the second protection signal Oc_flag in the embodiment shown in FIG. 14. In this case, after the moment t₃, the third intermediate signal output by the second OR logic circuit Or₂ is in a high level form, and the first control signal PWM₁ output by the second trigger RS₂ is in a low level form.

In conclusion, in this embodiment of this application, the control circuit 1113 may process the second protection signal Or₂ through a relatively simple OR logic circuit. In this way, based on the control circuit, the totem-pole power factor correction circuit, and the power supply module in which the totem-pole power factor correction circuit is located that are provided in embodiments of this application, structural complexity can be reduced, the costs can be reduced, thereby reducing space occupied by a device.

This application further provides an electronic device, including the control circuit 1113 provided in any embodiment of this application, or including the power supply module 11 provided in any embodiment of this application.

In the foregoing embodiments, the method performed by the control circuit 1113 provided in embodiments of this application is described. To implement functions in the method provided in embodiments of this application, the control circuit 1113 serving as an execution body may include a hardware structure and/or a software module, and implement the functions in a form of the hardware structure, the software module, or both the hardware structure and the software module. Whether a function in the foregoing functions is executed in a form of the hardware structure, the software module, or both the hardware structure and the software module depends on specific application and design constraint conditions of the technical solutions. It should be noted and understood that division of the modules of the foregoing apparatus is merely logic function division. During actual implementation, some or all modules may be integrated into one physical entity, or the modules may be physically separated. The modules may be all implemented in a form of software invoked by a processing element, or may be all implemented in a form of hardware. Alternatively, some modules may be implemented in a form of software invoked by a processing element, and some modules are implemented in a form of hardware. For example, each module may be a separate processing element, or may be integrated in a chip of the foregoing apparatus. In addition, each module may be stored in a memory of the foregoing apparatus in a form of program code, and is invoked by a processing element of the foregoing apparatus to perform functions of a determining module. Another module is implemented in a similar manner. In addition, all or some of the modules may be integrated together, or may be implemented independently. The processing element herein may be an integrated circuit, and has a signal processing capability. In an implementation process, steps in the foregoing method or the foregoing modules can be implemented by using a hardware integrated logic circuit in the processing element, or by using instructions in a form of software. For example, the foregoing modules may be configured as one or more integrated circuits for implementing the foregoing method, for example, one or more application-specific integrated circuits (application-specific integrated circuit, ASIC), or one or more digital signal processors (digital signal processor, DSP), or one or more field-programmable gate arrays (field-programmable gate array, FPGA). For another example, when one of the foregoing modules is implemented in a form of scheduling program code by a processing element, the processing element may be a general-purpose processor, such as a central processing unit (central processing unit, CPU) or another processor that can invoke the program code. For another example, the modules may be integrated together, and implemented in a form of a system-on-a-chip (system-on-a-chip, SoC).

All or some of the steps performed by the control circuit 1113 in the foregoing embodiments may be implemented by software, hardware, firmware, or any combination thereof. When software is used to implement the steps, all or some of the steps may be implemented in a form of a computer program product. The computer program product includes one or more computer instructions. When the computer program instructions are loaded and executed on a computer, all or some procedures or functions in embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (solid state disk, SSD)), or the like.

This application further provides a computer-readable storage medium. The computer-readable storage medium stores computer instructions. When the computer instructions are executed, any method performed by the control circuit 1113 in the foregoing embodiments of this application may be performed.

An embodiment of this application further provides a chip for running instructions. The chip is configured to perform any method performed by the control circuit 1113 in this application.

An embodiment of this application further provides a computer program product. The program product includes a computer program. The computer program is stored in a storage medium. At least one processor may read the computer program from the storage medium. When executing the computer program, the at least one processor may implement any method performed by the control circuit 1113 in this application.

Persons of ordinary skill in the art may understand that all or some of the steps of the foregoing embodiments may be implemented by a program instructing related hardware. The foregoing program may be stored in a computer-readable storage medium. When the program is executed, the steps of the method embodiments are performed. The foregoing storage medium includes various media that can store program code, such as a ROM, a magnetic disk, or an optical disc.

Persons of ordinary skill in the art may understand that, to facilitate description of the technical solutions of this application, embodiments of this application are separately described by using functional modules. Circuit devices in the modules may partially or completely overlap. This is not intended to limit the protection scope of this application.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A totem-pole power factor correction circuit, comprising:
a half-bridge circuit, configured to: receive an input voltage, and provide an output voltage, wherein the half-bridge circuit comprises a power transistor;
an inductor, wherein the input voltage charges the inductor through the power transistor, or the inductor is discharged through the power transistor to provide the output voltage;
a drive circuit, configured to drive the power transistor to be turned on or turned off;
a control circuit, configured to control the drive circuit to drive the power transistor; and
a first detection circuit, configured to detect a first current between the power transistor and a bridge arm middle point of the half-bridge circuit, wherein
when the control circuit controls the drive circuit to drive the power transistor to be turned on, in response to a current value of the first current being greater than a first predetermined value, the drive circuit drives the power transistor to be turned off.

2. The totem-pole power factor correction circuit according to claim 1, further comprising:
when the control circuit controls the drive circuit to drive the power transistor to be turned on, in response to the current value of the first current being less than or equal to the first predetermined value, the drive circuit drives the power transistor to be turned on.

3. The totem-pole power factor correction circuit according to claim 1 or 2, further comprising:
a second detection circuit, configured to detect a first voltage at the bridge arm middle point, wherein
when the control circuit controls the drive circuit to drive the power transistor to be turned on, in response to the voltage value of the first voltage being greater than a second predetermined value, the control circuit controls the drive circuit to drive the power transistor to be turned off.

4. The totem-pole power factor correction circuit according to claim 3, wherein
when the control circuit controls the drive circuit to drive the power transistor to be turned on, in response to the voltage value of the first voltage being less than or equal to the second predetermined value, the control circuit controls the drive circuit to drive the power transistor to be turned on.

5. The totem-pole power factor correction circuit according to claim 1 or 2, wherein
the first detection circuit comprises a first comparator; and the drive circuit comprises: a first phase inverter, a first OR logic circuit, a first flip-flop, and a first buffer;
an output end of the first comparator is connected to a first input end of the first OR logic circuit, an output end of the first phase inverter is connected to a second input end of the first OR logic circuit, an output end of the first OR logic circuit is connected to a first end of the first flip-flop, and an output end of the first flip-flop is connected to an input end of the first buffer;
the first comparator is configured to send a first protection signal to the first OR logic circuit when the first current is greater than die first predetermined value; the first phase inverter is configured to: perform phase inversion processing on the control signal, and send a first phase-inverted signal to the first OR logic circuit; the first OR logic circuit is configured to send a first OR logic signal to the first flip-flop based on the first phase-inverted signal and the first protection signal; the first flip-flop is configured to send a first flip-flop signal to the first buffer based on the first OR logical signal and the control signal; and the first buffer is configured to send the drive signal to the power transistor based on the first flip-flop signal.

6. The totem-pole power factor correction circuit according to claim 3 or 4, wherein
the second detection circuit comprises: a first voltage detection circuit, a first edge detection circuit, a second comparator, and a first AND logic circuit, wherein
the first voltage detection circuit is connected to the bridge arm middle point and a first input end of the second comparator, and an output end of the second comparator is connected to the first AND logic circuit through the first edge detection circuit;
the second detection circuit is configured to: detect a characteristic value of the first voltage at the bridge arm middle point, and send the characteristic value of the first voltage to the second comparator; the second comparator is configured to send a first intermediate signal to the first edge detection circuit when the voltage value of the first voltage is greater than the second predetermined value; the first edge detection circuit is configured to send a second intermediate signal to the first AND logic circuit on a rising edge or a falling edge of the first intermediate signal; the first AND logic circuit is configured to send a second protection signal to the control circuit based on the second intermediate signal and the control signal; and
the control circuit controls, based on the second protection signal, the drive circuit to drive the power transistor to be turned off.

7. The totem-pole power factor correction circuit according to claim 6, wherein
the characteristic value of the first voltage comprises a change rate of the first voltage at the bridge arm middle point;
the first voltage detection circuit comprises a first capacitor and a first resistor; and
a first end of the first capacitor is connected to the bridge arm middle point, a second end of the first capacitor is connected to a first end of the first resistor and the first input end of the second comparator, and a second end of the first resistor is grounded.

8. The totem-pole power factor correction circuit according to claim 6 or 7, wherein the control circuit comprises:
a reset signal generating circuit, configured to generate a reset signal of the power transistor;
a set signal generating circuit, configured to generate a set signal of the power transistor; and
a control signal generating circuit, wherein the control signal is configured to control the drive circuit based on the reset signal, the set signal, and the second protection signal.

9. The totem-pole power factor correction circuit according to claim 8, wherein the control signal generating circuit comprises:
a second OR logic circuit and a second flip-flop, wherein an output end of the second OR logic circuit is connected to a first input end of the second flip-flop; and
the second OR logic circuit is configured to send a third intermediate signal to the second flip-flop based on the second protection signal and a reset signal of the first power transistor, and the second flip-flop is configured to send a control signal to the drive circuit based on the third intermediate signal and the set signal of the power transistor.

10. A power supply module, configured to: obtain an input voltage, and supply power to a load, wherein the power supply module comprises:
the totem-pole power factor correction circuit according to any one of claims 1 to 9, configured to: obtain an input voltage, and provide an output voltage; and
a direct-current conversion circuit, configured to: perform voltage conversion on the output voltage, and then supply power to a load.
